Europäisches Patentamt

European Patent Office

Office européen des brevets

(19)

(11) Numéro de publication : **0 286 485 B1**

(12) **FASCICULE DE BREVET EUROPEEN**

(45) Date de publication du fascicule du brevet :
07.08.91 Bulletin 91/32

(51) Int. Cl.⁵ : **B23G 5/06**

(21) Numéro de dépôt : 88400652.9

(22) Date de dépôt : 18.03.88

(54) Perfectionnements aux tarauds destinés à réaliser des taraudages par enlèvement de métal.

(30) Priorité : 20.03.87 FR 8703848
13.11.87 FR 8715661

(43) Date de publication de la demande :
12.10.88 Bulletin 88/41

(45) Mention de la délivrance du brevet :
07.08.91 Bulletin 91/32

(84) Etats contractants désignés :
CH DE ES FR GB IT LI SE

(56) Documents cités :
FR-E- 57 333
US-A- 2 816 302
US-A- 4 181 457

(56) Documents cités :
MACHINES & TOOLING, vol. XLII, no. 5, 1971,
pages 52-55, Production Engineering
Research Ass., Melton Mowbray, GB; M.KH.
GOL'DFEL'D' et al.: "Leading-teeth taps for
precision threads"
MACHINES & TOOLING, vol. XLII, no. 5, 1971,
page 52-55, Production Engineering Research
Ass., Melton Mowbray, GB; V.P. LOPUKHOV:
"Avoiding axial undercutting of self-feed tapped threads"

(73) Titulaire : ETABLISSEMENTS RINEAU
FRERES
46, Boulevard Prairie au Duc
F-44200 Nantes (FR)

(72) Inventeur : Claverie, Pierre
77, rue du Jaunais
F-44000 Reze (FR)

(74) Mandataire : Schrimpf, Robert et al
Cabinet Regimbeau 26, Avenue Kléber
F-75116 Paris (FR)

Jouve, 18, rue Saint-Denis, 75001 PARIS

## Description

La présente invention concerne selon le préambule de la revendication 1 les tarauds destinés à réaliser des taraudages par enlèvement de métal voir par example US-A 2816302.

Pour enlever le métal, ces tarauds comportent des arêtes coupantes.

Plus précisément, chaque arête coupante est située à l'intersection d'une face et d'un flanc d'une dent de coupe ou d'une face et du dessus de la dent. Dans ce qui suit, on s'intéressera uniquement aux arêtes coupantes situées aux intersections des faces et des flancs et on désignera ces arêtes par "arêtes coupantes des flancs".

Ces dents coupantes doivent aussi présenter des zones associées aux arêtes coupantes des flancs pour frotter dans le taraudage et guider le taraud au cours de sa pénétration dans la matière en l'obligeant à pénétrer à une avance correspondant au pas du taraudage à réaliser, condition requise pour qu'un taraudage ait un profil de filet correct.

Dans les tarauds connus, ces zones de guidage sont constituées par les arêtes coupantes des flancs. En fait, chaque arête coupante d'un flanc comporte une partie d'arête (généralement la partie supérieure) qui doit seule être efficace pour couper la matière à tarauder, la partie restante de l'arête constituant une zone linéaire de guidage qui, théoriquement, ne doit que frotter.

Dans la pratique, cette partie de guidage d'une arête coupante d'un flanc, sous l'effet des forces qui s'appliquent coaxialement sur le taraud en action de coupe, a cependant tendance à gratter ou à couper le matériau sur lequel elle glisse, et le profil des filets du taraudage à réaliser s'en trouve déformé, en particulier pour les premiers filets taillés.

L'invention vise à éviter ces inconvénients et à réaliser un taraud à effet d'auto-guidage considérablement augmenté.

On y parvient, selon l'invention, grâce au fait que, pour certaines au moins des arêtes coupantes des flancs, la zone de frottement associée à l'arête du flanc est une zone sans pouvoir de coupe, située sur ce flanc et non située sur l'arête.

On réalise une telle zone sur le flanc avant et/ou sur le flanc arrière d'une dent et les dents concernées sont une partie ou la totalité des dents coupantes.

On constate qu'en supprimant le frottement des arêtes des flancs et en le remplaçant par celui de zones situées sur les flancs des dents coupantes, on augmente considérablement l'effet d'autoguidage, sans altérer l'efficacité de coupe des dents.

On réalise la zone de frottement d'un flanc de façon à éliminer simultanément la partie inférieure non coupante de l'arête concernée, sans toucher à la partie coupante de cette arête, ou on réalise la zone de frottement sans toucher à l'arête mais en donnant à la zone de frottement une dimension très légèrement supérieure à celle de l'arête.

Dans le premier cas, on peut appliquer l'invention à des tarauds déjà fabriqués tandis que dans le deuxième cas, il faut intervenir lors de la fabrication du taraud.

De préférence, on applique l'invention dès la première dent coupante du taraud, pour que le flanc de cette dent se guide déjà dans la coupe réalisée par la face de coupe de la dent, ou au moins dès la deuxième dent coupante pour qu'elle se guide dans le taraudage réalisé par la dent coupante précédente, et sur les dents coupantes suivantes.

On peut également appliquer l'invention aux arêtes formées à l'intersection de la face arrière de la dent, dans le sens de rotation du taraud, et des flancs de la dent pour éviter une détérioration du taraudage lors du détaraudage.

On décrira ci-après des exemples de réalisation conformes à la présente invention, en référence aux figures du dessin joint sur lequel :

— la figure 1 est une représentation schématique d'un taraud à trois goujures droites ;

— la figure 2 est une coupe du taraud de la figure 1 selon le plan transversal A-A de la figure 1 ;

— la figure 3 est une perspective montrant les dents coupantes et une partie des dents calibrantes d'une file de dents d'un peigne d'un taraud connu ;

— la figure 4 est une perspective agrandie de l'une des dents coupantes du peigne de la figure 3 ;

— la figure 5 est une vue comparable à celle de la figure 4 mais dans le cas d'une dent selon l'invention ;

— la figure 6 est une section par un plan perpendiculaire à l'axe du taraud de la dent de la figure 4 et passant par un point d'une arête de coupe ;

— la figure 7 est une section similaire à celle de la figure 6 mais dans le cas de la dent de la figure 5 ;

— la figure 8 est une section similaire à celle de la figure 7 mais dans le cas d'une dent selon une variante de réalisation de l'invention, et

— la figure 9 est une perspective des dents coupantes et d'une partie des dents calibrantes d'une file de dents d'un peigne d'un taraud selon l'invention, à comparer à la perspective de la figure 3.

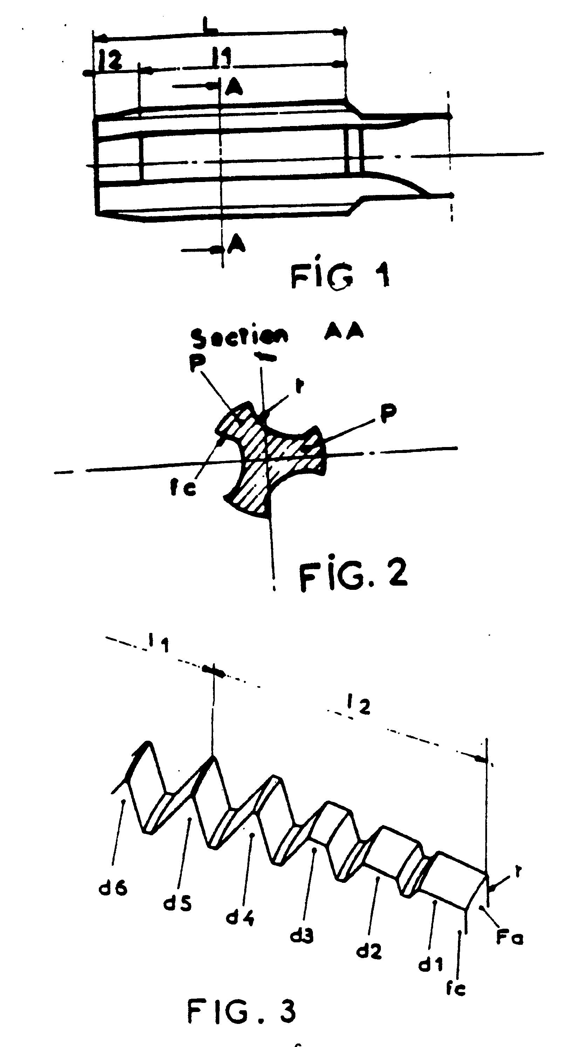

La figure 1 représente schématiquement un taraud à trois goujures droites et la figure 2 une section AA sur lesquelles sont définis les principaux termes utilisés ultérieurement. (C'est un type de taraud parmi toutes les possibilités)

La figure 3 représente une vue en perspective de la partie avant d'un des peignes P définis sur la figure 2. Sur cette vue, la partie dite calibrante 11 avec des profils de dents correspondant au profil du taraudage à réaliser est bien visible, elle est précédée de la partie coupante 12, généralement conique, qui présente des dents dont le profil est de plus en plus tronqué en sommet quand on se rapproche de la face avant du taraud Fa.

d1, d2, d3 et d4 sont des dents coupantes, d5 et d6 sont des dents dites calibrantes.

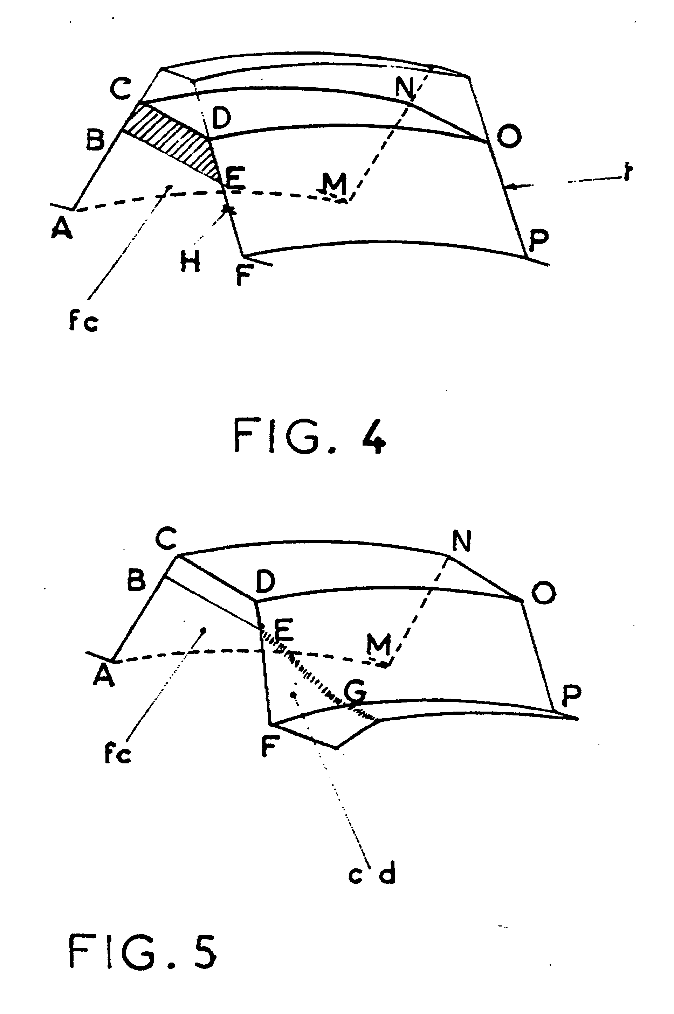

La figure 4 représente en perspective le détail d'une dent coupante de la partie coupante 12 d'un taraud normal.

BCDE représente la section du copeau coupée par cette dent dont le profil total est représenté sur la face de coupe Fc par ACDF. Sur le flanc avant FDOP, seule la partie DE de l'arête DF, à l'intersection avec la face de coupe Fc coupe le matériau. Toutes les dents de la partie coupante situées entre la face avant Fa du taraud et la dent considérée ont taillé le taraudage suivant la section ABEF. En théorie, la partie EF de l'arête DF ne doit pas couper mais assurer une fonction de guidage en frottant sur la partie du taraudage ABEF déjà réalisée par les dents précédentes.

De même, sur le flanc arrière ACNM, l'arête CB doit couper et BA doit guider.

L'invention consiste à déplacer le frottement des arêtes guides vers des zones de frottement sans aucun pouvoir coupant ; l'effet d'autoguidage du taraud qu'on peut aussi appeler l'effet auto-patronne se trouve ainsi considérablement augmenté.

Des contre-détalonnages judicieusement positionnés sur les flancs du taraud permettent de créer de nouvelles zones de frottement sans aucun pouvoir de coupe qui vont remplacer les zones de frottement traditionnelles

La figure 5 représente la même dent que la figure 4 avec un contre-détalonnage sur le flanc avant FDOP à proximité de la face de coupe. L'arête de coupe DE du flanc considéré, est préservée et conserve sa fonction de coupe proprement dite.

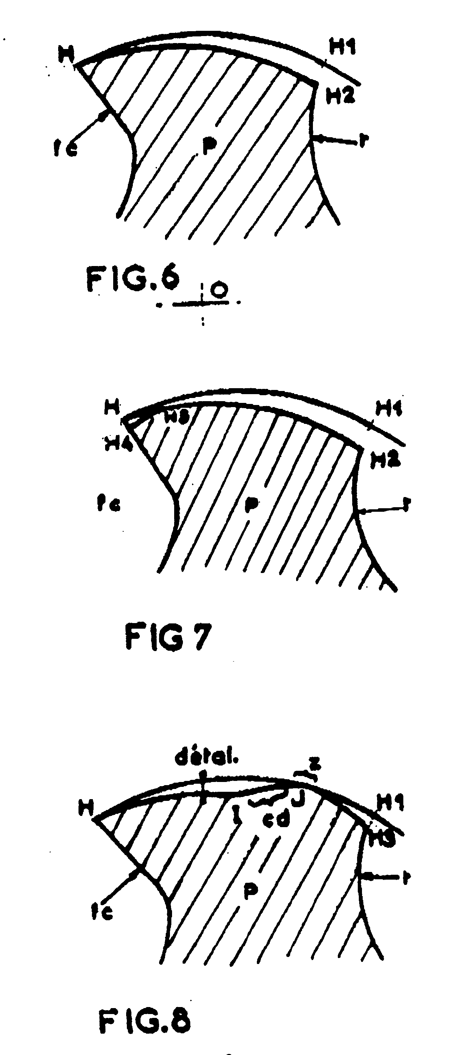

La figure 6 représente une section de la dent d'un taraud conventionnel représenté en figure 4, passant par un point quelconque H de l'arête DF. Si H est entre D et E il coupe, s'il est entre E et F il guide. H-H1 représente la trace du taraudage ; H1-H2 représente la valeur du détalonnage à flanc des filets sur la largeur du peigne P.

Cette figure 6 peut aussi représenter une section de la dent suivant l'invention quand le point H est situé entre D et E.

La figure 7 représente une section du taraud suivant l'invention passant par H, mais quand H est un point de l'arête guide EF. Le contre-détalonnage est parfaitement visible en H4-H3. L'ancien point de frottement H est escamoté et remplacé par un point de frottement H3. La nouvelle arête sur la face de coupe fc est matérialisée par le point H4 qui est à une distance de l'axe du taraud inférieure à celle de H3 ; pour créer le contre-détalonnage, de H4 vers H3, la meule ou autre outil qui réalise le contre-détalonnage s'est éloignée de l'axe du taraud.

Le point H3 n'est pas dans la théorie en contact avec le taraudage HH1 ; dans la pratique, ce jeu est de l'ordre de quelques microns ; quand le point H est proche de E, le jeu tend vers O pour augmenter quand H se situe à proximité de F.

Pour limiter le jeu possible entre les zones de frottement EG et le taraudage déjà réalisé et ainsi limiter au maximum le glissement possible du taraud, il est judicieux de réduire la longueur de FG.

La zone de frottement EG se visse sans possibilité de coupe dans le taraudage déjà réalisé et sans refouler le matériau pour constituer pour un effet patronne intégré au taraud. Dans la pratique, pour être certain de protéger la partie coupante DE, il est judicieux de réduire légèrement la hauteur de la partie en contre-détalonnage EF.

L'invention préconise également d'éliminer la partie inférieure des arêtes du talon t et de reporter le frottement possible sur des zones de guidage sur le flanc des filets.

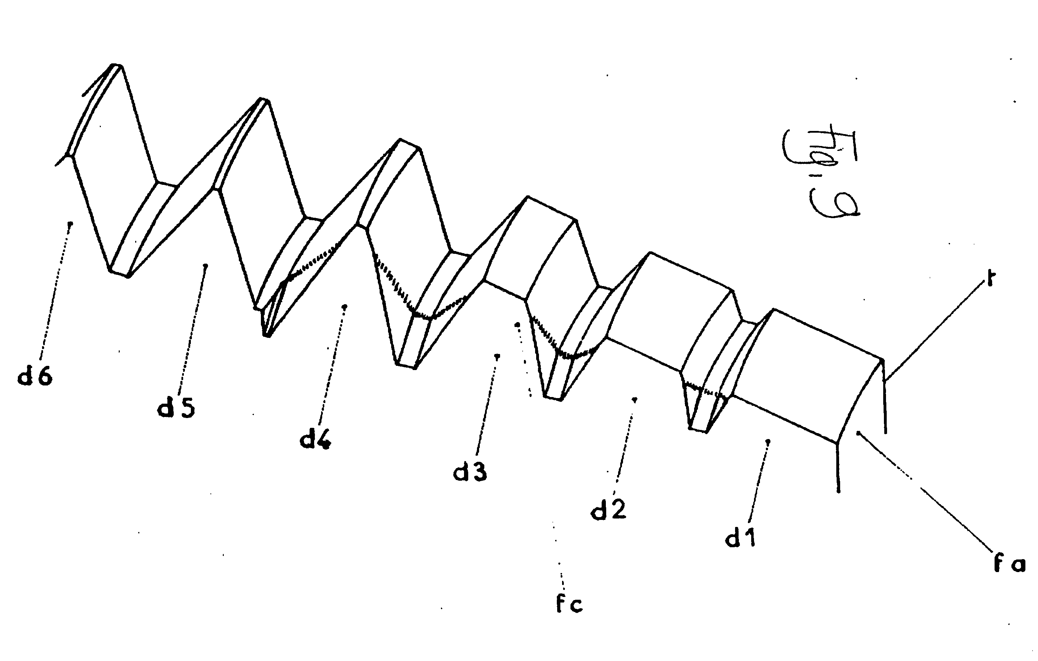

La figure 9 représente une réalisation avec contre-détalonnage sur les deux flancs.

Le mode de réalisation précédent crée des zones de guidage dans la partie conique coupante qui entre le point E et le point G ont, par rapport au taraudage réalisé, une sous-cote variable visualisée au point H3 de la figure 7.

Une autre mise en oeuvre de l'invention conduit à une solution à la fois plus fiable et plus facile à réaliser ; dans ce cas, le contre-détalonnage cd est réalisé sur le peigne P entre la face de coupe fc et le talon t, le plus souvent dans le tiers du peigne le plus proche du talon t.

La figure 8 est une section perpendiculaire à l'axe du taraud passant par un point H de l'arête DF. Si H est sur DE, c'est un point coupant, s'il est sur EF c'est un point de guidage.

HH1 représente la trace du taraudage taillé par le point H, entre H et I, le flanc de filet est détalonné normalement ; entre I et J, un contre-détalonnage permet de positionner en J le flanc de filet du taraud à une cote très proche de celle du taraudage réalisé par le point H. Entre J et H3, un détalonnage d'une valeur comprise entre zéro et un détalonnage normal permet de créer une zone de frottement Z pour assurer un guidage parfait du taraud, y compris au détaraudage. La zone CD de contre-détalonnage peut être précédée d'une mini goujure favorisant la lubrification.

Même si le point H est un point de l'arête coupante DE, le contre-détalonnage CD ne l'empêche pas de couper.

Dans cette option, la zone Z se visse et frotte, sans déformer le matériau, dans le taraudage réalisé par H et assure l'effet patronne recherché.

La cote de la zone Z peut être supérieure à celle du point H qui taille le taraudage de plusieurs centièmes de millimètre. Une meilleure option est que cette cote soit de quelques microns plus forte que celle du point H. Dans des cas particuliers où le matériau se resserre après avoir été taraudé, la cote de la zone Z peut être inférieure à celle du point H. La solution généralement admise comme étant la meilleure est celle où la surcote est comprise entre 0 et 5 microns.

Les différents détalonnages décrits précédemment qui créent une patronne de guidage intégrée au taraud, sont applicables sur tous les types de tarauds travaillant par enlèvement de métal.

De multiples méthodes et différents types de machines ou de moyens peuvent être utilisés pour réaliser les zones sans pouvoir coupant qui assurent le guidage au pas du taraud.

Le pouvoir de stabilisation des zones de guidage suivant l'invention est tel qu'on peut réduire considérablement leur nombre et réduire en même temps la longueur filetée totale 1.

Toutes les règles de répartition des zones sur les dents coupantes du taraud font partie de l'invention. Par exemple, la technique de travail d'un taraud à goujures hélicoïdales permet de ne prévoir les zones de guidage que sur les flancs avants et celle d'un taraud à entrée Gun sur les flancs arrières.

## Revendications

1. Taraud à arêtes coupantes, chaque arête coupante d'un flanc (DF, CA, OP, NM) étant située à l'intersection d'une face (ACDF ; NOPM) et d'un flanc (FDOP ; ACNM) d'une dent de coupe et une zone de frottement (AB, EF) étant associée à l'arête coupante d'un flanc pour guider le taraud dans le taraudage, caractérisé en ce que pour certaines au moins des arêtes coupantes des flancs (AC, DF), la zone de frottement (AB, EF) associée à l'arête du flanc est une zone sans pouvoir de coupe (c, d), située sur ce flanc et non située sur l'arête.

2. Taraud selon la revendication 1, caractérisé en ce qu'une telle zone de frottement est réalisée sur le flanc (FDOP ; ACNM) ou sur chaque flanc de la première dent de coupe ($d_1$) d'une file de dents.

3. Taraud selon la revendication 1 ou 2, caractérisé en ce qu'une telle zone de frottement est réalisée sur un flanc (FDOP ; ACNM) ou sur chaque flanc de la deuxième dent de coupe ($d_2$) d'une file de dents.

4. Taraud selon la revendication 1, caractérisé en ce qu'une telle zone de frottement est réalisée sur le flanc (FDOP ; ACNM) ou sur chaque flanc de chaque dent de coupe ($d_1$-$d_4$) d'une file de dents.

5. Taraud selon l'une des revendications précédentes, caractérisé en ce que la zone de frottement est réalisée sur le flanc à proximité immédiate de la face (ACDF ; NOPM) munie de l'arête de façon à ne laisser subsister que la partie coupante efficace de l'arête.

6. Taraud selon l'une des revendications précédentes, caractérisé en ce que la zone de frottement est réalisée sur le flanc à distance de la face (ACDF ; NOPM) munie de l'arête de façon à laisser subsister la totalité de l'arête.

7. Taraud selon l'une des revendications précédentes, caractérisé en ce que la zone de frottement est réalisée sur le flanc par contre-détalonnage (cd).

## Claims

1. Tap with cutting edges, each cutting edge of a flank (DF, CA, OP, NM) being located at the intersection of a face (ACDF ; NOPM) and of a flank (FDOP; ACNM) of a cutting tooth and a friction area (AB, EF) being associated with the cutting edge of a flank to guide the tap in the internal thread, characterized in that for at least some of the cutting edges of the flanks (AC, DF) the friction area (AB, EF) associated with the edge of the flank is an area without cutting power (c, d) located on this flank and not located on the edge.

2. Tap according to Claim 1, characterized in that such a friction area is produced on a flank (FDOP ; ACNM) or on each flank of the first cutting tooth ($d_1$) of a row of teeth.

3. Tap according to Claim 1 or 2, characterized in that such a friction area is produced on a flank (FDOP ; ACNM) or on each flank of the second cutting tooth ($d_2$) of a row of teeth.

4. Tap according to Claim 1, characterized in that such a friction area is produced on a flank (FDOP ; ACNM) or on each flank or each cutting tooth ($d_1$-$d_4$) of a row of teeth.

5. Tap according to one of the preceding claims, characterized in that the friction area is produced on the flank immediately next to the face (ACDF ; NOPM) equipped with the edge so as to leave only the effective cutting part of the edge.

6. Tap according to one of the preceding claims, characterized in that the friction area is produced on the flank spaced from the face (ACDF ; NOPM) equipped with the edge so as to leave the entire edge.

7. Tap according to one of the preceding claims, characterized in that the friction area is produced on the flank by undercutting (cd).

## Patentansprüche

1. Gewindebohrer mit Schneidkanten, bei dem sich jede Schneidkante einer Flanke (DF, CA, OP, NM) am Schnitt einer Stirnseite (ACDF ; NOPM) und einer Flanke (FDOP ; ACNM) eines Schneidezahnes befindet ist und eine Reibzone (AB, EF) mit der Schneidkante einer Flanke verbunden ist, um den Gewindebohrer beim Bohren zu führen, dadurch gekennzeichnet, daß zumindest für einige der Schneidkanten der Flanken (AC, DF) die Reibzone (AB, EF), die mit der Kante der Flanke verbunden ist, eine Zone ohne Schneidefähigkeit (c, d) ist, die sich auf der Flanke und nicht auf der Kante befindet.

2. Gewindebohrer nach Anspruch 1, dadurch gekennzeichnet, daß eine solche Reibzone auf einer Flanke (FDOP ; ACNM) oder auf jeder Flanke des ersten Schneidezahnes ($d_1$) einer Reihe von Zähnen realisiert ist.

3. Gewindebohrer nach Anspruch 1 oder 2, dadurch gekennzeichnet, daß eine solche Reibzone auf einer Flanke (FDOP ; ACNM) oder auf jeder Flanke des zweiten Schneidezahnes ($d_2$) einer Reihe von Zähnen realisiert ist.

4. Gewindebohrer nach Anspruch 1, dadurch gekennzeichnet, daß eine solche Reibzone auf einer Flanke (FDOP ; ACNM) oder auf jeder Flanke von jedem Schneidezahn ($d_1$-$d_4$) einer Reihe von Zähnen realisiert ist.

5. Gewindebohrer nach einem der vorhergehenden Ansprüche, dadurch gekennzeichnet, daß die Reibzone auf der Flanke in unmittelbarer Nähe der Stirnseite (ACDF ; NOPM) realisiert ist, die mit einer Kante derart versehen ist, daß nur der effektiv schneidenden Teil der Kante bestehen bleibt.

6. Gewindebohrer nach einem der vorhergehenden Ansprüche, dadurch gekennzeichnet, daß die Reibzone auf der Flanke in Distanz zur Stirnseite (ACDF ; NOPM) realisiert ist, die mit einer Kante derart versehen ist, daß die ganze Kante bestehen bleibt.

7. Gewindebohrer nach einem der vorhergehenden Ansprüche, dadurch gekennzeichnet, daß die Reibzone auf der Flanke durch Hinterdrehen in Gegenrichtung (CD) realisiert ist.

FIG 1

Section AA

FIG. 2

FIG. 3

FIG. 4

FIG. 5

FIG.6

FIG 7

FIG.8

Fig. 9

d6  d5  d4  d3  d2  d1

fc

fa

EP 0 286 485 B1